# EUROPEAN PATENT APPLICATION

(11) **EP 2 111 982 A1**
(43) Date of publication of application: **28.10.2009**
(21) Application number: 08007990.8
(22) Date of filing: 25.04.2008
(51) Int. Cl.: B32B 38/10

(54) **Method for the production of thin polymer film**

(71) Applicant: Amcor Flexibles Transpac N.V., 1935 Zaventem (BE)
(72) Inventor: Daelmans, Eddy, 3650 Disen-Stokkem (BE); Olsen, Erik, 8700 Horsens (DK); Malfait, Tony, 8880 Rollegem-Kapelle (BE)
(74) Representative: pronovem

(57) **Abstract**

The present invention is related to a method for producing a multilayer structure comprising a thin polymeric layer (10) comprising the steps of:
- coextruding said thin layer (10) on both sides of a support polymer layer (11) and forming a coextruded structure (7);
- laminating or extrusion coating at least one additional layer (16) on both sides of said coextruded structure (7);
- peeling-off said thin layers (10), along with the additional layers (16) from said support layer (11) to build a multilayer polymer structure.

## Description

### Field of the Invention

The present invention is related to the production of thin polymer films and a lamination process of said thin films into a multilayer film structure.

The present invention further discloses a packaging comprising multilayer polymer film structures comprising such thin polymer film.

### State of the Art

Polymer film structures are usually produced by extrusion techniques such as blown or cast extrusion. Films having more than one layer can also be produced by blown or cast coextrusion techniques.

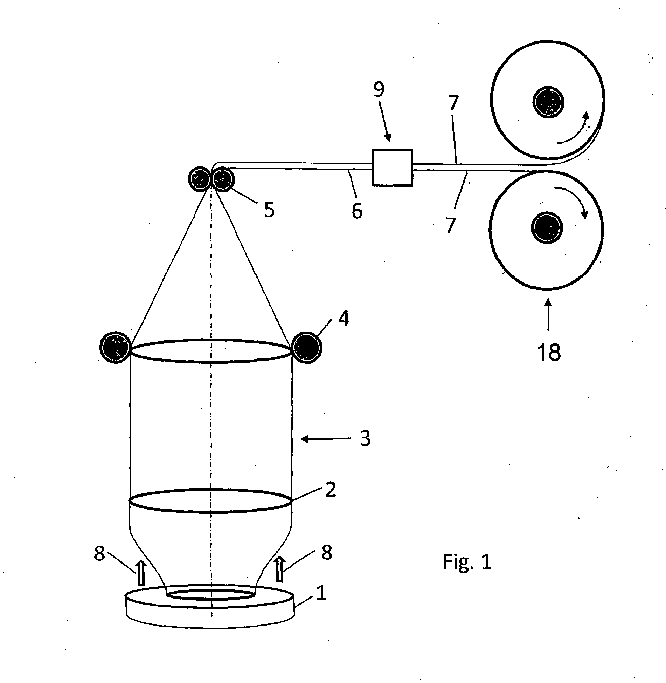

Blown film extrusion systems are known and have already been in use for a long time. Such systems are supplied with plastics in a granulated form, which are then plasticized to a viscous mass in extruders under a high pressure and external heating. This mass, which has a high temperature due to frictional and external heating, is formed circularly in a blowing head and is discharged from the blowing head through a tubular die (see Figure 1). This process is called blown film extrusion. Monolayer extrusion can be performed, but more than one extruder can be used as well (3 to 9 extruders are known from the market) and all are connected to one common die. This last process is called coextrusion and leads to multilayer polymer structures.

The molten polymer mass already forms a film tube immediately after leaving the tubular die. However, the diameter of this film tube can change, since the film tube is not yet cooled down completely. After the polymer mass has left the die, the process of cooling down the film to room temperature starts. This is done in a vertical tower and by air venting the surface (Figure 1). In this process the film thickness usually falls in a range from 25 µm to 200 µm. The production of thinner films through this process is difficult, due to the poor mechanical strength of the hot polymer during its solidification.

Another well known process for forming monolayer or multilayer polymeric film is cast extrusion or coextrusion. In this case, a flat die is fed with the molten polymer, possibly through a multilayer feed block, and the film is solidified on cooling rollers. Usually, the thickness of the film when it leaves the die lips is much higher than the final thickness, the film being stretched during its solidification. The thickness of the films produced by this process is usually limited to 20µm, since getting below this last value leads to instabilities due to the limited melt strength of the extruded material.

Some particular applications requests nevertheless thinner films, for example in the field of resealable packages. One of these particular applications is the use of an adhesive, which is based on a tacky substrate and integrated into a structure with a seal layer as the outer layer. The system is based on the sealing of a very thin film against another structure to obtain a firm sealing of the seal layer to the structure. The first seal layer is produced with a polymer that is easy to break. A polymer that is easy to break is made by a combination of its physical properties and thickness. Therefore, when one separates the structure, the seal layer will break into the tacky layer. After the opening of such a tacky layer, said layer can act as a re-seal area.

As an example, the document FR2741605 discloses a reclosable package, wherein a sealant layer needs to be ruptured, before the peel opening may occur (cohesive rupture). The force needed to rupture said sealant layer is directly related to the layer thickness, so document FR2741605 uses the smallest film thickness that is easily industrially available.

The problem of having a sufficiently thin layer to be easily torn is so sharp that some other documents, such as EP1077186, disclose a method to ease the tearing of the sealant layer by partially cutting it by lasers or by rotating knives at the limit of the sealing zone, bypassing the thickness limitation. Such a process is difficult to implement industrially, as for example the pre-cuts have to be perfectly aligned with the sealing hot bars.

Even in the case of thick layers, some polymers are actually very difficult to extrude in both cast and blown film application due to poor melt strength. The above factors will all have an influence on the possible minimum thickness of extruded polymer films.

Patent document US 6,887,334 discloses a process for forming thin film laminations of thin fluoropolymer films to receiver sheets, more particularly, the production of very thin, transferable fluoropolymer films. A thin fluoropolymer base layer is applied onto a support layer, which may be a thicker film. The support layer/thin base layer is then laminated to a receiver sheet, said support layer being then stripped away, leaving the base film on the receiver sheet.

### Aims of the Invention

The present invention aims to provide a method for producing polymer films that overcomes the drawbacks of the prior art.

The present invention aims to provide a method for the production of a multilayer polymer structure comprising a very thin film and a multilayer polymer structure obtained by the production method of the present invention.

The present invention also aims to provide a method that minimizes the amount of scrap in the production process of said multilayer polymer structure comprising a very thin film.

The present invention also aims to provide a packaging comprising a multilayer polymer structure comprising a very thin film produced according to the process of the present invention.

### Summary of the Invention

The present invention discloses a method for producing a multilayer structure comprising a thin polymeric layer, said method comprising the steps of:
- coextruding said thin layer on both sides of a support polymer layer and forming a coextruded structure;
- laminating or extrusion coating at least one additional layer on both sides of said coextruded structure;
- peeling-off said thin layers, along with the additional layers from said support layer.

Particular embodiments of the present invention comprise at least one or a suitable combination of the following features:
- the thin layer is itself a multilayer polymer film;
- the multilayer polymer film comprises a barrier layer;
- the additional layer is laminated on the thin layer using a pressure sensitive adhesive layer;
- the pressure sensitive adhesive is a permanent adhesive;
- the thin layer comprises amorphous poly(ethylene terephtalate) (PETG);
- the thin layer comprises a starch-based polymer film;
- the thickness of said thin layer is less than 15µm;
- the thickness of said thin layer is less than 10µm.

The present invention further discloses a polymer multilayer film comprising a thin film obtainable by the process of claim 1 and a reclosable packaging comprising said polymer multilayer film.

### Brief Description of the Drawings

Fig. 1 is a schematic representation of a blown film production unit.

Fig. 2 is a schematic representation of the process of the present invention, with magnified views of examples of film structures at different process steps.

### Detailed Description of the Invention

In the present invention, thin polymer layers 10 are coextruded on both sides of a thicker polymer support layer 11, producing a symmetrical multilayer polymer structure 7. The polymer of the support layer 11 is such that it can easily be separated from said thin layers 10. Thus, the thin layers 10 are supported during the solidification, and there is no more mechanical constraint such as a sufficient melt strength of said thin layer 10 (low melt strength can be due either to the film thickness or to the nature of the extruded polymer). The thin layers 10 can then be separated from the support layer 11 and be used separately.

Without being limitative, the use of a symmetrical structure (thin layer/support layer/thin layer) has several advantages, for example:
- the possibility of reducing the weight ratio between the support layer and the thin layers 10 allows the reduction of recyclable scrap;
- the thickness of the support layer can be reduced, as the melt strength of the thin layers 10 is distributed on two thin layers 10 instead of one, further reducing the amount of recyclable scrap;
- symmetrical structures are easier to produce in terms of process than non symmetrical structures and a symmetric structure will not have a tendency to curl, e.g. to roll itself up after production.

It should be noticed at this stage that said thin layers 10 comprise optionally one or more additional layer, the total thickness of the individual layer 10 being less than what could be coextruded in an industrial process.

As very thin layers 10 are usually difficult to handle in further processing, one can add additional layers by lamination, extrusion coating or any other available process before the thin layers are peeled off from said support layer 11.

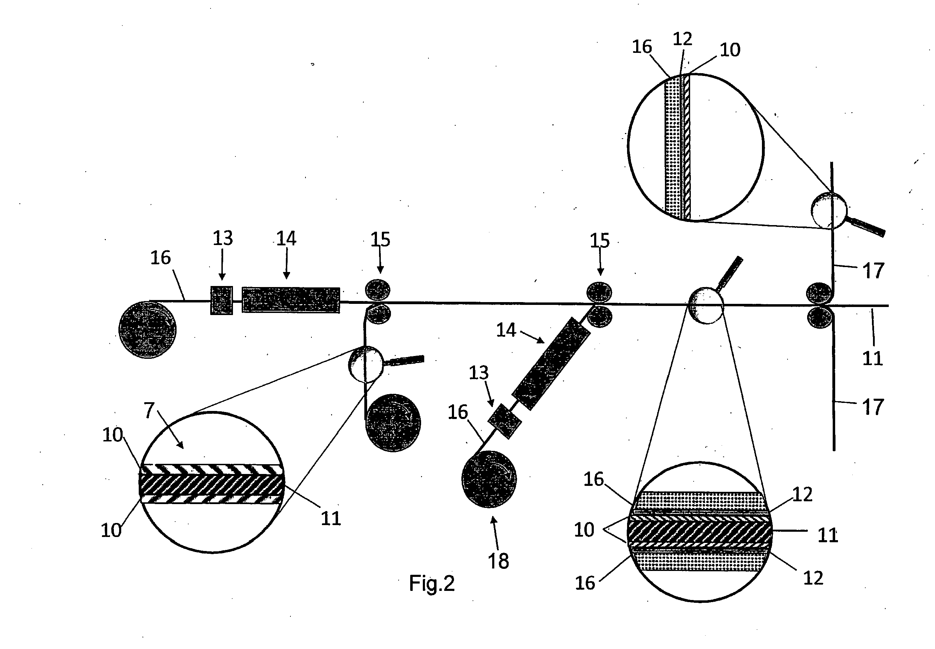

In a preferred embodiment of the present invention, the coextruded film is laminated on both side in a triplex lamination device (see figure 2) before the thin layers 10 along with the additional laminated layer(s) 16 are peeled-off from the support layer 11.

The expression "triplex lamination device", means a lamination machinery in which a film is laminated on both sides in a single device, as shown in Fig. 2.

The inventor discovered that it was very difficult to extrude specific biodegradable polymers such as PLA or Plantic both in blown and cast extrusion, due to very poor stability of the melt.

Another embodiment discloses a resealable film structure produced by the process of the present invention and comprising a very thin sealant layer 10 laminated by means of a pressure sensitive adhesive 12 on a film 16 giving other attractive properties such as mechanical strength, water and gas barrier,....

Such structures, except for the sealant layer thickness, are described in the document FR2741605, which is hereby incorporated by reference. The relation between the rupture force of a thin film and its thickness is discussed in this document.

In a particular embodiment of the present invention, the process comprises the following steps:
- coextruding a structure with a support layer 11 "sandwiched" between two very thin sealant layers 10;
- extrusion coating or solvent coating a pressure sensitive adhesive on one side of a lamination film 16;
- laminating the PSA extrusion coated or the PSA solvent coated lamination film on both sides of the original coextruded structure;
- peeling off the laminated structure 17 from both sides of the support layer 11.

By this method, one can advantageously produce thin films 10 used as sealant layer in a thickness range between 5 to 10 µm.

As a pressure sensitive adhesive can comprise chemicals that can diffuse through the sealant layer and possibly modify the organoleptic properties of stored foods, the thin layer 10 can advantageously comprise additional layers having particular barrier properties.

### Examples

As described above, in the present invention a coextrusion with a support layer 11 and a thin film 10 (5 - 10 micron) on both sides is performed leading to the general structure (ABA). After this step, in a extrusion coating or solvent coating process, a PSA (pressure sensitive adhesive) is applied on a substrate (example PET) and then the above three layers are laminated on top on the PSA to have the following structure: SUBSTRATE-PSA-ABA. This structure is then taken through an extrusion or solvent based coater to apply another layer of PSA to produce the following structure: SUBSTRATE-PSA-ABA-PSA-SUBSTRATE. This structure is then separated into SUBSTRATE-PSA-A ; B ; A-PSA-SUBSTRATE in one or two processes.

### Example 1

In a first example of the present invention, a thin starch-based polymer film (based on 80% Amylose) and named Plantic was extruded. In the present state of the art, the minimum thickness of Plantic produced on a cast line with a calendaring process after the cast line and the first set of cooling rollers is 100 µm. In the present invention Plantic film thicknesses of 30-60 µm have been extruded.
The following structure Plantic 40µm / MDPE 30µm / Plantic 40µm has been extruded. The PE forming the support layer is either LDPE or MDPE to increase the stiffness and the stability during extrusion. The coextrusion of this structure was stable and easy to process. After this step, the structure Plantic 40pm/MDPE 30µm/Plantic 40µm was laminated on a paper foil by means of an intermediate biodegradable adhesive to achieve the following structure: paper (50g/m²)/adhesive/Plantic 40µm / MDPE 30µm / Plantic 40µm/ adhesive/ paper (50g/m²).
The structure OPET 23 µm/PSA 12µm/Plantic 40µm is then peeled-off from the polyethylene support PE 30µm.

### Example 2

This example is based on a similar ABA structure as example 1 namely Plantic 40µm / LDPE 40µm / Plantic 40µm but then, this structure is laminated on another biodegradable polymer such as an oriented PLA film of 20 µm (e.g.Biopol) by means of a biodegradable adhesive.
The following structure is obtained:
O-PLA 20 µm/adhesive /Plantic 40µm / LDPE 40µm / Plantic 40µm/ adhesive/ O-PLA 20 µm and the structure PLA 20 µm/PSA 10µm /Plantic 40µm is peeled-off from the polyethylene support.

### Example 3

This example is based on PETG 5 µm / LDPE 40 µm /PETG 5µm, then this structure is extrusion coated with 17µm PSA and laminated to a substrate of 35 µm OPET to obtain the structure
OPET 35 µZm/PSA 17µm/ PETG 5µm / LDPE 40µm / PETG 5µm/ PSA 17 µm/ OPET 35 µm.
The structure OPET 35 µm/PSA 17µm/ PETG 5µm is then peeled-off from the polyethylene support LDPE 40µm.

### Example 4

This example is based on PETG 10 µm / MDPE 30 µm /PETG 10µm then this structure is extrusion coated with 17 µm PSA and laminated to a substrate of 35 µm OPET to obtain the structure
OPET 35 µm/PSA 17µm/ PETG 10µm/ MDPE 30µm / PETG 10µm/ PSA 17µm/ OPET 35µm.
The structure OPET 35 µm/PSA 17µm/ PETG 10µm is then peeled-off from the polyethylene support MDPE 30µm.

### Example 5

This example is based on PETG 5 µm / LDPE 40 µm /PETG 5µm, then this structure is solvent coated with 3,5 µm PSA and laminated to a substrate of 35 µm OPET to obtain the structure
OPET 35 µm/PSA 3,5µm/ PETG 10µm/ MDPE 30µm / PETG 10µm/ PSA 3,5µm/ OPET 35µm.
The structure OPET 35 µm/PSA 3,5µm/ PETG 10µm is then peeled-off from the polyethylene support LDPE 30µm.

### Example 6

This example is based on PETG 10 µm / MDPE 30 µm /PETG 10µm then this structure is solvent coated with 3,5 µm PSA and laminated to a substrate of 35 µm OPET to obtain the structure
OPET 35 µm/PSA 3,5µm/ PETG 10µm/ MDPE 30µm / PETG 10µm/ PSA 3,5µm/ OPET 35µm.
The structure OPET 35 µm/PSA 3,5µm/ PETG 10µm is then peeled-off from the polyethylene support MDPE 30µm.

### Example 7 (comparative)

In this example, the thin film has been replaced by a film produced according to the prior art. This film was a PETG/PE/PETG structure, having a total thickness of 25µm. This film was extrusion coated with 17 µm PSA, and then laminated to a substrate of 35µm OPET.

The films having the structures of examples 3 to 7 have then been sealed onto an APET base web. The peel strength ranges are summarised in table 1. The peel geometry is a 180° peel test. The "first seal line" is the force needed to initiate the peeling, which is characteristic of the breaking of the sealant layer. When this first seal line has the same value as that of the permanent adhesive, this means that the force needed to break the sealant layer is lower than or equal to the permanent adhesive strength.

**Table 1**

| Examples | Thin film (sealant layer) thickness | First seal line (N/15mm) | Permanent adhesive strength (N/15mm) |
|---|---|---|---|
| Example 3 | 5 µm | 10 | 10 |
| Example 4 | 10 µm | 11 | 10 |
| Example 5 | 5 µm | 4,1 | 1,8 |
| Example 6 | 10 µm | 5 | 1,8 |
| Example 7 | 25 µm | 14 | 12 |

Example 7 shows globally a higher first seal line than the examples of the invention. The values of the first seal line of example 3 and 4 are representative of the peel force of the pressure sensitive adhesive. It was also observed in the case of the comparative example 7 that it was difficult to reach a clean peeling. Most peeling occurred with elongation and/or partial delamination.

### Keys

**1**. blow film die
**2**.Solidification line
**3**.Film bubble
**4.**Entrance of the folding unit
**5.** Exit of the folding unit
**6.** Lay flat tube
**7.**Multilayer coextruded film
**8.** Cooling air flow
**9.** Slitting unit
**10**. Thin layer A
**11**. Support layer B
**12.** Adhesive layer
**13.** Adhesive application unit
**14.** Drying unit
**15**. Lamination cylinders
**16.** Lamination film C
**17.** Multilayer film
**18.** Coextruded multilayer coil

## Claims

1. A method for producing a multilayer structure comprising a thin polymeric layer (10), said method comprising the steps of:
- coextruding said thin layer (10) on both sides of a support polymer layer (11) and forming a coextruded structure (7);
- laminating or extrusion coating at least one additional layer (16) on both sides of said coextruded structure (7);
- peeling-off said thin layers (10), along with the additional layers (16) from said support layer (11).

2. The method as in claim 1, wherein said thin layer (10) is itself a multilayer polymer film.

3. The method as in claim 2, wherein said multilayer polymer film comprises a barrier layer.

4. The method as in any of the previous claims, wherein the additional layer (16) is laminated on the thin layer (10) using a pressure sensitive adhesive layer (12).

5. The method of claim 4, wherein the pressure sensitive adhesive is a permanent adhesive.

6. The method as in any of the previous claims, wherein said thin layer (10) comprises amorphous poly(ethylene terephtalate) (PETG).

7. The method as in any of the previous claims, wherein said thin layer (10) comprises a starch-based polymer film.

8. The method as in claim 6, wherein the thickness of said thin layer (10) is less than 15µm.

9. The method as in claim 6, wherein the thickness of said thin layer (10) is less than 10µm.

10. A polymer multilayer film comprising a thin film obtainable by the process of any of the previous claims.

11. A recloseable packaging comprising the multilayer polymer film of claim 10.
